Europäisches Patentamt

European Patent Office

Office européen des brevets

(19)

(11) **EP 1 312 915 A1**

(12) **EUROPEAN PATENT APPLICATION**
published in accordance with Art. 158(3) EPC

(43) Date of publication:
**21.05.2003 Bulletin 2003/21**

(21) Application number: **01938745.5**

(22) Date of filing: **19.06.2001**

(51) Int Cl.⁷: **G01N 27/447**

(86) International application number:
**PCT/JP01/05213**

(87) International publication number:
**WO 01/098768 (27.12.2001 Gazette 2001/52)**

(84) Designated Contracting States:
**DE FR GB IT**

(30) Priority: **20.06.2000 JP 2000185276**

(71) Applicant: **Japan Science and Technology Corporation**
**Kawaguchi-shi, Saitama-ken 332-0012 (JP)**

(72) Inventors:
• **IKUTA, Natsuki**
  **Hiroshima-shi, Hiroshima 734-0022 (JP)**

• **HIROKAWA, Takeshi**
  **Aki-gun, Hiroshima 735-0011 (JP)**

(74) Representative: **Vinsome, Rex Martin et al**
**Urquhart-Dykes & Lord**
**St Nicholas Chambers**
**Amen Corner**
**Newcastle-Upon-Tyne NE1 1PE (GB)**

(54) **ELECTROPHORETIC ANALYSIS METHOD**

(57)      By capillary electrophoresis, an effective mobility to play an important role for identifying an unknown sample is quickly determined highly precisely. A standard substance is added to a sample containing an unknown substance (unknown sample) (S101). This unknown sample to which the standard substance is added is introduced into a capillary, and capillary electrophoresis is executed (S103). Next, by executing this capillary electrophoresis, the various parameters of the standard substance and the unknown sample are determined (S107). Next, on the basis of the various parameters and a theoretical equation, the effective mobility of the unknown sample is calculated. On the basis of the calculated effective mobility of the unknown sample, the substance of the unknown sample is identified (S109).

FIG. 2

**Description**

FIELD OF THE INVENTION

The present invention relates to an electrophoretic analysis method, and particularly to an electrophoretic analysis method in which by capillary zone electrophoresis, a standard substance is added to an unknown sample to convert respective migration times, from which an effective mobility of the unknown sample is determined, and the unknown sample is quickly identified with high precision.

BACKGROUND OF THE INVENTION

In recent years, in the case where polymers, colloid particles, etc. contained in various solutions are identified, an analysis method utilizing a phenomenon in which the polymers or colloid particles move (migrate) corresponding to potential differences, so-called electrophoresis, become widespread. The migration velocity of the polymers or colloid particles in the solution that is influenced by not only the kind and concentration of an electrolyte in the solution but also the shape and size of the particles of the polymers or colloid particles themselves. For this reason, capillary zone electrophoresis (CZE) that is one of the analysis methods utilizing this electrophoresis is being watched as, for example, an important analysis method for analyzing the length of DNA fragments contained in proteins, etc.

This capillary zone electrophoretic analysis method is required to have high reproducibility regarding a peak position to be used directly as a quantitative index of an unknown substance (unknown sample) in a solution. In the case where the analysis results of this capillary zone electrophoresis is expressed by a pherogram based on coordinate axes in which an abscissa represents the migration time by an unknown sample in a solution, and an ordinate represents the peak position, in order to obtain a peak position with good reproducibility, it is a very important factor to control each of a migration voltage (current), a temperature of a separation chamber, and electroosmotic flow.

It is easily possible to control the migration voltage (current) and the temperature of the separation chamber by making the analysis conditions (such as an inner diameter of a capillary and a supporting electrolyte) identical. On the other hand, a temperature increase of a separation tube by a Joule's heat is inevitable and the control of the electroosmotic flow becomes difficult. For these reasons, the reproducibility of the electrophoresis of a usual capillary zone electrophoretic pherogram having a time axis is not high as compared with that in high-performance liquid chromatography (HPLC).

As factors of disturbing the reproducibility of the migration time of an unknown sample in a solution are enumerated a change of electroosmotic flow, a relaxation effect of potential gradient (RPG), and a temperature increase by a Joule's heat generated with the application of a high voltage. Since these occur due to complex factors, it is difficult to control them. In the case where the measurement is carried out by using different equipments, it is assumed that even if the sample or supporting electrolyte is identical, it is difficult to obtain the same migration time. Accordingly, in order to correctly compare the measurement results in the case of using different equipments, it is necessary to standardize the electrophoresis data.

On the other hand, Lee, et al. proposed a migration index (MI) using a value obtained by dividing a quantity of electricity, i.e., an integral value of current, by a cross-sectional area of a capillary and a whole length of the capillary and an adjusted migration index (AMI) obtained by correcting MI of the osmotic flow (the units of MI and AMI in the description being "$\mu C/m^3$"). It was considered that if the supporting electrolyte is identical, AMI could become a considerably good quantitative index. However, since a conductivity of the supporting electrolyte is included as one of the parameters of AMI, even a slight difference in the composition (for example, the case where even when a pH is substantially the same, counter ions are different) produces different measurement results.

DISCLOSURE OF THE INVENTION

In order to prevent the matters as described above, it may be required to propose an electrophoretic analysis method using an effective mobility relying upon only conditions of a sample ion and a supporting electrolyte as a quantitative index. However, in the conventional conversion from the migration time to the effective mobility, in many cases, the change of the mobility by a Joule's heat and the relaxation effect of potential gradient were not taken into consideration.

Here, the technology related to the invention will be described.

As the method of correcting the change of the mobility by a Joule's heat and the relaxation effect of potential gradient, the present inventors previously filed an application for patent with respect to a method in which a standard substance is added to an unknown sample, capillary zone electrophoresis is executed, a migration time of the standard substance is determined, and assuming that an osmotic flow velocity linearly changes with respect to the time, the migration time of the standard substance is converted into an effective mobility (Japanese Patent Application No.

11-251604).

This method does not correct temperature dependency of the effective mobility of the sample (temperature dependency of a sample ion itself and temperature dependency to a supporting electrolyte) and so on in relation with a strict physical phenomenon but uses a hypothetic osmotic flow velocity on the assumption that the osmotic flow velocity linearly changes with respect to the time. Accordingly, it is assumed that all of phenomena are included in coefficients in empirical equations representing this linear change, whereby physical meanings become vague.

Thus, the present inventors grasped three factors that lower the reproducibility (i.e., temperature dependency of the sample ion itself influencing the migration velocity, temperature dependency to the supporting electrolyte, and a delay of the migration time based on the relaxation effect of potential gradient) as original physical phenomena and groped for a method of theoretically eliminating these factors.

Under these circumstances, the invention is aimed to quickly determine with high precision an effective mobility to play an important role for identifying an unknown sample by capillary zone electrophoresis.

Further, the invention is aimed to eliminate a scattering of the effective mobility by operational conditions of an analysis equipment and to enhance reliability of data as a standardized index of every unknown sample. Moreover, the invention is aimed to use the same index in different analysis equipments.

According to the first dissolution means of the invention, there is provided an electrophoretic analysis method including:

a step of adding a standard substance to a sample containing an unknown sample and measuring migration times of the standard substance and the unknown sample by electrophoresis and a migration time of a substance having a mobility of 0 or a migration time of a system peak, and

a step of determining an effective mobility of the unknown sample on the basis of the migration times of the standard substance and the unknown sample and the migration time of the substance having a mobility of 0 or the migration time of a system peak as measured in the foregoing measuring step, and a known effective mobility of the standard substance at a standard temperature.

According the second dissolution means of the invention, there is provided an electrophoretic analysis method including:

a step of adding a standard substance to a sample containing an unknown sample and measuring migration times of the standard substance and the unknown sample by electrophoresis, and

a step of determining an effective mobility of the unknown sample on the basis of the migration times of the standard substance and the unknown sample as measured in the foregoing measuring step, and a known effective mobility of the standard substance at a standard temperature.

BRIEF DESCRIPTION OF THE DRAWINGS

Fig. 1 is a schematic configurative diagram of a general capillary zone electrophoresis equipment.
Fig. 2 is a flow chart of the electrophoretic analysis method according to the invention.
Fig. 3 shows pherograms obtained from an experiment not applying the migration time - effective mobility conversion according to the invention.
Fig. 4 shows pherograms at calculation of the mobilities using equation (8).
Fig. 5 shows pherograms at calculation of the mobilities using equations (14) and (16).
Fig. 6 shows pherograms in which the abscissa is MI.
Fig. 7 shows pherograms in which the abscissa is AMI.
Fig. 8 shows pherograms according to the conventional analysis method, in which the abscissa is the effective mobility.
Fig. 9 shows pherograms according to the analysis method as previously applied for patent by the present inventors, in which the abscissa is the effective mobility.

DETAILED DESCRIPTION OF PREFERRED EMBODIMENTS OF THE INVENTION

1. Outline:

1-1. Capillary zone electrophoresis:

As the analysis method using electrophoresis are known U-shaped tube electrophoresis, agarose electrophoresis, capillary zone electrophoresis, etc. In the invention, since an effective mobility to play an important role for identifying an unknown sample is determined by using the capillary zone electrophoresis, the outline of the capillary zone electrophoresis will be first explained.

The capillary zone electrophoresis is means for separation and analysis by a difference in the mobility of ions regardless of water or organic solvents and is an analysis method having a markedly high separation capability as compared with liquid chromatography, which is very watched in recent years. This capillary zone electrophoresis can be utilized so far as a material is soluble in some solvents and can conduct the electricity. Accordingly, the capillary zone electrophoresis can analyze substantially "all" materials so far as conditions for the separation (such as solvents, pH, and additives) are put in good order. However, since this capillary zone electrophoresis is hardly applied to neutral substances or giant molecules among of which no difference in the mobility is found as they are, in many cases, other electrophoresis modes are employed for the separation and analysis.

As other electrophoretic methods, for example, in the case of neutral molecules, a method called micellar electrokinetic chromatography (MEKC) is employed, and in he case of giant molecules, a capillary gel electrophoresis (CGE) to add a gel to an electrolyte is employed. Especially, the capillary gel electrophoresis is one of key technologies of the human genome plan, and the base sequence is determined by using this means. Incidentally, there may be the case where the invention is applicable to these electrophoretic methods, too.

Also, the capillary zone electrophoresis is watched to be useful for proteome (identification of functions and structures of proteins) that is considered to be a next stage of biochemical research of the genome project. In particular, it is reported that if a minute mobility can be determined, the capillary zone electrophoresis will become a very effective analysis method in the research of proteins by combining with a mass analysis equipment. Additionally, since an amount of the waste liquids is greatly low (several milliliters at maximum) , it can be said that the capillary zone electrophoresis is an analysis method taking into consideration influences against the environment.

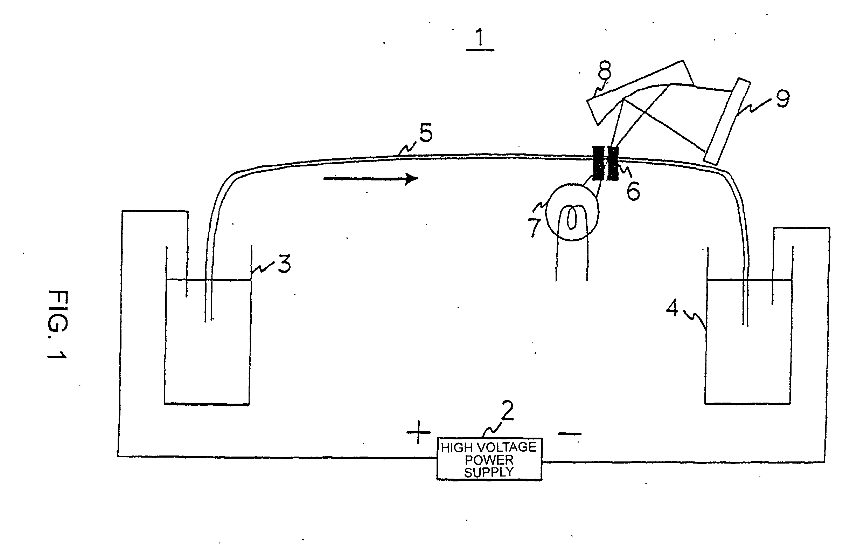

Fig. 1 is a schematic configurative diagram of a general capillary zone electrophoresis equipment. However, a subject of the analysis is cations within a sample, and an indirect absorption method as described later was applied as the analysis of these cations.

This capillary zone electrophoresis equipment 1 is provided with, for example, a high voltage power supply section 2, vials 3 and 4, a capillary 5, a slit 6, a light source (such as UV lamps) 7, a diffraction grating 8, and a multi-channel photodiode 9. The high voltage power supply section 2 is a high voltage power supply having, for example, an output of from 0 to 30 kV and is connected to each of the vials 3 and 4 via a wiring. The vials 3 and 4 are placed on a turntable or translational table (not shown) . Into the vials 3 and 4 are injected proper supporting electrolytes having UV absorption. Also, a sample having no UV absorption for the analysis is introduced into the vial 3. The capillary 5 is a tube having proper inner diameter and length, one end of which is inserted into the vial 3, with the other end being inserted into the vial 4.

The capillary 5 is equipped with the slit 6 having a gap for controlling a width of ultraviolet rays to be irradiated from the light source 7. The light having passed through the slit 6 is decomposed into a proper spectrum by the diffraction grating 8. The obtained spectrum is digitalized as an absorbance of UV by the multi-channel photodiode 9. Incidentally, the high voltage power supply section 2, the vials 3 and 4, and the multi-channel diode 9 are controlled by a computer (not shown).

The operational outline of the capillary zone electrophoresis equipment 1 will be explained.

First of all, vial 3 filled by a supporting electrolyte to be injected into the capillary and the empty vial 4 are set. The vial 4 is sealed, and the supporting electrolyte injected into the vial 3 is sucked. The sucked supporting electrolyte is filled within the capillary 5. Next, a sample is injected in the vicinity of one end of the capillary 5 by, for example, hydrodynamic injection. Concretely, the supporting electrolyte (even water is employable) is introduced into the vial 4, and the sample is introduced into the vial 3. At this time, the liquid level of the vial 3 is set to be higher than the liquid level of the vial 4. The sample is injected in the vicinity of the capillary 5 from the vial 3 due to a principle of siphon by a difference in the liquid level between the vials 3 and 4. Next, the supporting electrolyte is injected, and the vials 3 and 4 having the same liquid level are set. Then, a high voltage is applied to the both ends of the capillary 5 from the high voltage supply section 2.

The sample migrates within the capillary 5 by an effective length (a distance from the vicinity of one end of the capillary 5 into which the sample has been introduced to the slit 6 along the capillary 5). The migration direction of cations within the sample goes from the vial 3 towards the vial 4 as shown by an arrow in the drawing. Meanwhile, the respective cations are separated due to a difference in the migration velocity (effective mobility) of the respective cations. The sample separated due to the difference in the migration velocity (effective mobility) is detected as a spectral data every fixed period of time by the above-described diffraction grating 8. The spectral data is digitalized as an absorbance of UV by the above-described multi-channel photodiode 9. Incidentally, while the cations within the sample were analyzed herein, in the case where anions are analyzed, it is only required to make the sign of the high voltage supply section 2 reverse.

Further, during the injection of the sample in the vicinity of the capillary 5, the hydrodynamic injection was employed, but examples of other methods include suction, pressurization, and electro-pressurization. According to the suction, the vial 3 is charged with the sample, and the vial 4 is made empty. Next, the vial 4 is sealed, and the sample is injected into the capillary 5 by suction. According to the pressurization, the vial 3 is charged with the sample, and the vial 4 is made empty. Next, the vial 3 is sealed, and the sample is injected into the capillary 5 by pressurization. According to the electro-pressurization, the vial 3 is charged with the sample, and the vial 4 is charged with the electrolyte (even water is employable). Next, the sample is injected into the capillary 5 by applying a high voltage.

1-2. Calculation of effective mobility by migration time-effective mobility conversion:

An electrophoresis phenomenon in the capillary zone electrophoresis and an outline of calculation of an effective mobility will be explained.

According to the conventional migration time-effective mobility conversion, an effective mobility m is determined according to the following manner.

$$m = v_{ion}/E = (l/t - v_{eof}) / (V/L) \qquad (1)$$

In the equation, V represents an applied voltage; E represents a potential gradient; I represents an effective length; L represents a capillary whole length; $v_{ion}$ represents a migration velocity of an unknown sample; and $\underline{t}$ represents a period of time (migration time) until the unknown sample is detected by a detector.

Further, $v_{eof}$ (electroosmotic flow velocity) is obtained using a migration time $t_{eof}$ of a substance having a mobility of 0 or of a system peak according to the following equation.

$$v_{eof} = l / t_{eof} \qquad (2)$$

That is, the equation (1) will become as follows.

$$m = (l / t - l / t_{eof}) / (V / L) \qquad (1)'$$

The system peak as referred to herein means a peak as if a substance were present, appearing in the case where when an indirect absorption method is used, a fluid within the capillary is flown by the electroosmotic flow, and a portion in which the sample is introduced reaches the detector. Accordingly, the migration time $t_{eof}$ of the system peak means a period of time until the system peak appears. Further, the indirect absorption method as referred to herein is a detection method utilizing a phenomenon in which, for example, in the case where the sample does not have absorption of UV (ultraviolet rays), when a substance having UV absorption is used as the electrolyte, the substance of the electrolyte is reduced only in a portion of the sample, whereby the UV absorbance is lowered.

Further, the electroosmotic flow as referred to herein means a phenomenon in which, for example, when a silica capillary is used, a silanol group present in an inner wall of the capillary dissociates, whereby the inner wall is negatively charged, and the solution within the capillary is apparently positively charged, and thus, when an electric field is applied, the whole of the liquid flows into the negative electrode side. In most cases, even when other substances are used for the capillary, this electroosmotic flow is generated (however, the direction of the flow may possibly change depending upon the substance or the composition of the electrolyte) . Moreover, the migration time $t_{eof}$ at a mobility of 0 means a period of time from the application of an electric field to the detection of a substance because by applying the electric field, the whole of the liquid within the capillary is pushed and flown by the electroosmotic flow as described above, and hence, even the substance having no mobility (namely, the mobility is 0) (such as neutral substances) is detected by the detector.

Here, the change of the mobility with respect to the temperature will be investigated. It is considered that the temperature dependency of the effective mobility m of the sample may be split into a term f(T) of the sample ion itself and a term $g(T) = \varepsilon/\eta$ ($\varepsilon$: dielectric constant, $\eta$: viscosity coefficient) of the temperature dependency to the supporting electrolyte as expressed in the following equation.

$$m = f(T) \cdot g(T) \qquad (3)$$

The Taylor's expansion of this equation around a standard temperature $T_0$ is as follows.

$$m = (f_0 + f_1 \Delta T + f_2 \Delta T^2 + \cdots)(g_0 + g_1 \Delta T + g_2 \Delta T^2 + \cdots) \qquad (4)$$

In the equation, $\Delta T = T - T_0$, $f_0 = f(T_0)$, and $g_0 = g(T_0)$.
Here, since the change of ion size by the temperature change is very small as compared with the viscosity of a solvent and the temperature dependency of the dielectric constant, when the temperature dependency of influences against the ion itself is neglected, the effective mobility m is expressed as follows.

$$m = f_0(g_0 + g_1\Delta T + g_2\Delta T^2 + \cdots)$$

$$= f_0 g_0 (1 + g_1/g_0 \cdot \Delta T + g_2/g_0 \cdot \Delta T^2 + \cdots) \qquad (5)$$

Here, where $\Delta T$ is small, the secondary or sequent members can be neglected. Further, when the replacement of $f_0 g_0 = m_0$ and $g_1/g_0 = \alpha$ is made, the mobility is expressed below independent upon the substance.

$$m = (1 + \alpha \Delta T) \cdot m_0 \qquad (6)$$

In the equation, $m_0$ represents an effective mobility of the sample at the standard temperature, and $\alpha$ represents a temperature coefficient independent upon the sample ion. In general, the value of the temperature coefficient $\alpha$ at 25 °C is about 0.02 (e.g., K: 0.0191, Li: 0.0228).

1-3. Conversion taking into consideration only temperature coefficient:

Next, the conversion taking into consideration only the temperature coefficient will be explained.
An effective mobility $m_{0,S}$ of a known standard substance (effective mobility $m_S$) at the standard temperature $T_0$ is determined below using the equation (1)'.

$$m_{0,s} = (1/t_s - 1/t_{eof})/\{(1 + \alpha \Delta T)E\}$$

Additionally, from the equation (6), the relation between $m_S$ and $m_{0,S}$ is as follows.

$$1 + \alpha \Delta T = m_s/m_{0,s} \qquad (7)$$

Further, an effective mobility $m_0$ of a sample substance (effective mobility m) at the standard temperature $T_0$ is determined below using the equation (1)'.

$$m_0 = (1/t - 1/t_{eof})/\{(1 + \alpha \Delta T)E\}$$

Additionally, from the equation (6), the relation between m and $m_0$ is as follows.

$$1 + \alpha \Delta T = m/m_0$$

From these equations, the effective mobility $m_0$ of the sample substance (ion) at the temperature $T_0$ is obtained

in the following equation.

$$m_0 = m / (1 + \alpha \Delta T) = (l / t - l / t_{eof}) / \{ (1 + \alpha \Delta T) E\}$$

$$= \{(t_{eof}/ t - 1) / (t_{eof}/ t_s - 1)\} \cdot m_{0, s} \tag{8}$$

According to the equation (8), the parameters depending upon the equipment, such as E, V, I, and L are eliminated, so that it becomes possible to standardize the electrophoresis data independent upon the conditions of the equipment.

Accordingly, in this embodiment of the invention, in the capillary zone electrophoresis in which a standard substance is added to an unknown sample, a mobility is measured from the respective migration times, and the substance is identified from the mobility value based on the foregoing theory, first of all, as a correction method of the case where the effective mobility is influenced by only the temperature, the effective mobility $m_0$ of the unknown substance is determined from the migration time $t_{eof}$ of the substance having a mobility of 0 or of the system peak, the migration time $t_S$ of the standard substance, and the effective mobility $m_{0, S}$ of the standard substance at the standard temperature $T_0$ according to the equation (8). Incidentally, the parameter $m_{0, S}$ included in the equation (8) is determined from articles or existing data. Further, $t_{eof}$ is measured from, for example, unevenness in the concentration of the electrolyte within the capillary. In addition, with respect to $t_{eof}$, t and $t_S$, it may be estimated what detection peak is corresponding to what substance is from existing data and experimental values, or estimations. Accordingly, the respective migration times can be determined from pherograms obtained from the experiments as described later.

1-4. Conversion taking into consideration temperature and time correction:

Next, the conversion taking into consideration not only the temperature but also the time correction will be explained.

In general, it is considered that all migration times of ions are delayed by a fixed period of time by the relaxation effect of potential gradient. This relaxation effect of potential gradient is a phenomenon found by the present inventors through simulation (see *J. Chromatogr. A*, **898** (1999), 19-29). Concretely, in the case where a high voltage is applied to the both ends of the capillary using a constant voltage power supply, the current flowing within the capillary does not become constant immediately due to the time change of potential gradient in a portion into which the sample has been introduced, but becomes constant after a while. For this reason, a mean potential gradient (voltage/whole length of capillary) to be used for the determination of the mobility using the conventional electrophoresis is not obtained immediately. Accordingly, the relaxation effect of potential gradient refers to a phenomenon in which the mean potential gradient is delayed in detection by a fixed period of time as compared with the migration time as expected by the conventional calculation method (the delayed time being expressed by "$\tau$" in the description).

Here, assuming that the electroosmotic flow is constant during the measurement, when the relaxation effect of potential gradient is taken into consideration, the effective mobility m of the sample ion is expressed as follows.

$$m = l / \{(t - \tau) E\} - m_{eof} \tag{9}$$

Here, $m_{eof}$ is the mobility of osmotic flow, $v_{eof}/E$. That is, this mobility represents one at the temperature increased by a Joule's heat within the capillary. When this equation is substituted for the foregoing equation (6), the following equation from which the effective mobility $m_0$ at the standard temperature $T_0$ can be determined is obtained.

$$m_0 = \{l / (t - \tau) E - m_{eof}\} / (1 + \alpha \Delta T) \tag{10}$$

However, the parameters $\tau$, $m_{eof}$, and $(1 + \alpha \Delta T)$ are unknown. Thus, these parameters are determined from the standard samples (standard substances) A and B whose mobilities are known, and the migration time $t_{eof}$ of the substance having a mobility of 0 or of the system peak. The mobilities of the standard samples A and B and the system peak are expressed by the following equations.

$$m_{0, A} = [l / \{(t_A - \tau) E\} - m_{eof}] / (1 + \alpha \Delta T) \tag{11}$$

$$m_{0,B} = [l/\{(t_B - \tau) E\} - m_{eof}] / (1 + \alpha \Delta T) \tag{12}$$

$$m_{eof} = l / \{(t_{eof} - \tau) E\} \tag{13}$$

In the equations, $t_A$ and $t_B$ represent migration times of the standard substances A and B, respectively; and $m_{0,A}$ and $m_{0,B}$ represent effective mobilities of the standard substances A and B at the standard temperature $T_0$, respectively.

The following equations are obtained from the equations (11) to (13).

$$\tau = \{m_{0,A} t_A (t_{eof} - t_B) - m_{0,B} t_B (t_{eof} - t_A)\}$$

$$/ \{m_{0,A} (t_{eof} - t_B) - m_{0,B} (t_{eof} - t_A)\} \tag{14}$$

Further, the following equation is obtained by modifying the equation (11).

$$1 + \alpha \Delta T = [1/ \{(t_A - \tau) E\} - m_{eof}] / m_{0,A} \tag{15}$$

Moreover, when the equations (13) and (15) are substituted for the equation (10), the following equation is obtained.

$$m_0 = \{(t_A - \tau) (t_{eof} - t) / (t - \tau) (t_{eof} - t_A)\} \cdot m_{0,A} \tag{16}$$

According to the equation (16), the parameters depending upon the equipment, such as E, V, I, and L, are eliminated, so that it becomes possible to standardize the electrophoresis data independent upon the conditions of the equipment.

Accordingly, in this embodiment of the invention, as a correction method of the case where the effective mobility $m_0$ is influenced by not only the temperature but also the delay in migration time by the relaxation effect of potential gradient, the effective mobility $m_0$ of the unknown substance is determined from the migration time $t_{eof}$ of the substance having a mobility of 0 or of the system peak, the migration times $t_A$ and $t_B$ of the two or more standard substances, and the effective mobilities $m_{0,A}$ and $m_{0,B}$ of the standard substances at the standard temperature $T_0$ according to the equations (14) and (16). Incidentally, the parameter $m_{0,A}$ and $m_{0,B}$ included in the equations (14) and (16) are determined from articles or existing data. Further, with respect to $t_{eof}$, t, $t_A$, and $t_B$, the relations with the substances can be grasped from existing data and experimental values, or estimations, as described above. Accordingly, the respective migration times can be determined from pherograms obtained from the experiments as described later.

In addition, the conversion taking into consideration the case where the substance having a mobility of 0 cannot be added, or the system peak cannot be detected (that is, $t_{eof}$ cannot be identified), will be explained. First of all, substances A, B and C whose mobilities are known are added a sample, and their migration times $t_A$, $t_B$ and $t_C$ are measured, thereby determining necessary parameters.

The mobilities of the standard substances A, B and C are expressed as follows.

$$m_{0,A} = [l / \{(t_A - \tau) E\} - m_{eof}] / (1 + \alpha \Delta T) \tag{11}$$

$$m_{0,B} = [l / \{(t_B - \tau) E\} - m_{eof}] / (1 + \alpha \Delta T) \tag{12}$$

$$m_{0,C} = [l / \{(t_C - \tau) E\} - m_{eof}] / (1 + \alpha \Delta T) \tag{17}$$

The following equations are obtained from the equations (11), (12) and (17).

$$\tau = \{m_{0,A} t_A (t_C - t_B) + m_{0,B} t_B (t_A - t_C) + m_{0,C} t_C (t_B - t_A)\}$$

$$/ \{m_{0,A} (t_C - t_B) + m_{0,B} (t_A - t_C) + m_{0,C} (t_B - t_A)\} \tag{18}$$

$$1 + \alpha \Delta T = \{l (t_i - t_j)\} /$$

$$\{E (t_i - \tau) (t_j - \tau) (m_{0,i} - m_{0,j})\} \tag{19}$$

In the equations, i and j are any one of A, B and C, and i is not equal to j.

$$m_{eof} = l / \{(t_i - \tau) E\} - m_{0,i} (1 + \alpha \Delta T) \tag{20}$$

In the equation, i is any one of A, B and C.
When the thus obtained $\tau$, $(1 + \alpha \Delta T)$, and $m_{eof}$ are substituted for the equation (10), the following equation is obtained.

$$m_0 = \{(t_i - t) (t_j - \tau) (m_{0,j} - m_{0,i})\}$$

$$/ \{(t - \tau) (t_i - t_j)\} + m_{0,i} \tag{21}$$

In the equation, i and j are any one of A, B and C, and i is not equal to j.
Here, when $m_{0,C} = 0$, $t_C = t_{eof}$, i = C, and j = A, the following equations (14) to (16) are obtained.
The leading steps will be described below.
The following equations are obtained from the equations (11), (12) and (17).

$$m_{eof} = l / \{(t_A - \tau)\} - m_{0,A} (1 + \alpha \Delta T) \tag{11}'$$

$$m_{eof} = l / \{(t_B - \tau)\} - m_{0,B} (1 + \alpha \Delta T) \tag{12}'$$

$$m_{eof} = l / \{(t_C - \tau)\} - m_{0,C} (1 + \alpha \Delta T) \tag{17}'$$

Further, the equation (12)' and the equation (17)' are subtracted from the equation (11)', followed by putting in order to obtain the following equations.

$$(t_A - \tau) (t_B - \tau) = \{1 (t_B - t_A)\}$$

$$/ \{E (1 + \alpha \Delta T) (m_{0,A} - m_{0,B})\} \tag{a}$$

$$(t_A - \tau) (t_C - \tau) = \{1 (t_C - t_A)\}$$

$$/ \{E (1 + \alpha \Delta T) (m_{0,A} - m_{0,C})\} \tag{b}$$

Moreover, (a)/(b) is expressed as follows.

$$(t_B - \tau) / (t_C - \tau) = \{(t_B - t_A) (m_{0,A} - m_{0,C})\}$$

$$/ \{(t_C - t_A) (m_{0,A} - m_{0,B})\} = K \tag{c}$$

Thus, the following equation is obtained.

$$\tau = (t_B - K t_C) / (1 - K) \tag{c}'$$

Here, the numerator and the denominator of $\tau$ are put in order as follows.

$$\text{Numerator of } \tau = t_B - \{(t_B - t_A)(m_{0,A} - m_{0,C}) t_C\} / \{(t_C - t_A)(m_{0,A} - m_{0,B})\}$$

$$= \{m_{0,A} t_A (t_C - t_B) + m_{0,B} t_B (t_A - t_C) + m_{0,C} t_C (t_B - t_A)\}$$

$$/ \{(t_C - t_A)(m_{0,A} - m_{0,B})\}$$

$$\text{Denominator of } \tau = 1 - \{(t_B - t_A)(m_{0,A} - m_{0,C})\} / \{(t_C - t_A)(m_{0,A} - m_{0,B})\}$$

$$= \{m_{0,A}(t_C - t_B) + m_{0,B}(t_A - t_C) + m_{0,C}(t_B - t_A)\} / \{(t_C - t_A)(m_{0,A} - m_{0,B})\}$$

Further, the following equation is obtained.

$$\tau = \{m_{0,A} t_A (t_C - t_B) + m_{0,B} t_B (t_A - t_C) + m_{0,C} t_C (t_B - t_A)\}$$

$$/ \{m_{0,A}(t_C - t_B) + m_{0,B}(t_A - t_C) + m_{0,C}(t_B - t_A)\} \tag{18}$$

Moreover, the following equation is obtained from the equation (a) or (b).

$$1 + \alpha \Delta T = \{l (t_i - t_j)\} /$$

$$\{E (t_j - \tau)(t_j - \tau)(m_{0,i} - m_{0,j})\} \tag{19}$$

Still further, the following equation is obtained by using any one of the equations (11)', (12)' and (17)'.

$$m_{eof} = l / \{(t_i - \tau)\} - m_{0,i} (1 + \alpha \Delta T) \tag{20}$$

Thus, even in the case where the migration time $t_{eof}$ of the substance having a mobility of 0 or of the system peak cannot be identified, the effective mobility $m_0$ of the unknown substance can be determined from the migration times $t_A$, $t_B$ and $t_C$ of the three or more standard substances and the effective mobilities $m_{0,A}$, $m_{0,B}$ and $m_{0,C}$ of the standard substances at the standard temperature $T_0$ according to the equations (18) and (21). However, when $m_{0,C}$ = 0, $t_C = t_{eof}$, i = C, and j = A, the equation (14) is equal to the equation (18), and the equation (16) is equal to the equation (21), respectively. Accordingly, in the case where the migration time $t_{eof}$ of the substance having a mobility of 0 or of the system peak cannot be identified, the experiment is omitted. Incidentally, the parameter $m_{0,A}$, $m_{0,B}$ and $m_{0,C}$ included in the equations (18) and (21) are determined from articles or existing data. Further, with respect to $t_A$, $t_B$, $t_C$, and t, the relations with the substances can be grasped from existing data and experimental values, or estimations, as described above. Accordingly, the respective migration times can be determined from pherograms obtained from the experiments.

1-5. Processing procedures of electrophoretic analysis method according to the invention:

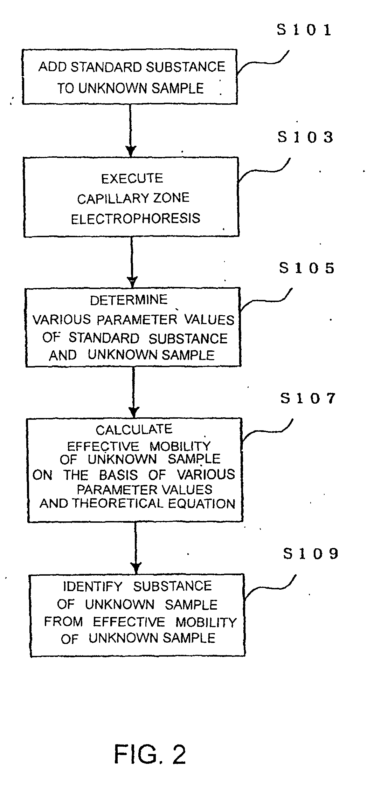

Fig. 2 is a flow chart of the electrophoretic analysis method according to the invention. Incidentally, for the sake of convenience of the explanation, the flow chart is briefly explained here, and specific experimental results will be described later.

First of all, the standard substance is added to the sample containing the unknown substance (unknown sample) (S101). The unknown sample having the standard substance added thereto is introduced into the capillary, and the above-described capillary zone electrophoresis is executed (S103). Next, by executing the capillary zone electrophoresis, as explained above in the section 1-3, during determining the effective mobility, in the case where only influences by the temperature are taken into consideration, the migration time $t_{eof}$ of the substance having a mobility of 0 or of the system peak, the migration time $t_s$ of the standard substance, and the migration time t of the unknown sample are obtained, and further, the known effective mobility $m_{0, S}$ of the standard substance at the standard temperature $T_0$ is obtained (S105). The effective mobility $m_0$ of the unknown sample is calculated on the basis of these parameter values and the equation (8) (S107). Incidentally, the substance of the unknown sample may be identified on the basis of the calculated effective mobility $m_0$ of the unknown sample (S109).

Also, as explained above in the section 1-4, during determining the effective mobility, in the case where influences by not only the temperature but also the delay in migration time by the relaxation effect of potential gradient are taken into consideration, the migration time $t_{eof}$ of the substance having a mobility of 0 or of the system peak, the migration times $t_A$ and $t_B$ of the two or more standard substances, and the migration time t of the unknown sample are obtained, and further, the known effective mobilities $m_{0, A}$ and $m_{0, B}$ of the standard substances at the standard temperature $T_0$ are obtained (S105). The effective mobility $m_0$ of the unknown sample is calculated on the basis of these parameter values and the equations (14) and (16) (S107). Incidentally, the substance of the unknown sample may be identified on the basis of the calculated effective mobility $m_0$ of the unknown sample (S109).

2. Experiments and comparison:

2-1. Experimental method:

Here, a capillary zone electrophoresis equipment to be used for verifying the effectiveness of the invented method is equipped with a capillary having an inner diameter (I.D.) of 75 μm or 50 μm and a whole length of 40 cm (effective length: 27.5 cm). The capillary is set up at a temperature of 25 °C, and a voltage of 15 kV or 30 kV is applied thereto. Further, in order to detect a wavelength (in order to put the measurement results on coordinate axes), an indirect absorption method to measure the absorption of 3,5-lutidine of 265 nm was employed.

As the sample were used a 30 mM equimolar mixed sample and a 0.3 mM equimolar mixed sample, each consisting of KCl, LiCl, TRIS (trihydroxymethyl aminomethane), ε-aminocaproic acid, and sodium octylsulfonate. The 30 mM and 0.3 mM equimolar samples were each injected by the above-described hydrodynamic injection methods (2 cm, 15 s) and (2 cm, 75 s), respectively. As the supporting electrolyte were used a solution of 20 mM 3,5-lutidine whose pH had been adjusted at 6.0 by the addition of HCl (supporting electrolyte A: SE20mM) and a solution of 40 mM 3,5-lutidine whose pH had been adjusted at 6.0 by the addition of acetic acid (supporting electrolyte B: SE40mM).

2-2. Experiment in the state not applying the migration time - effective mobility conversion according to the invention:

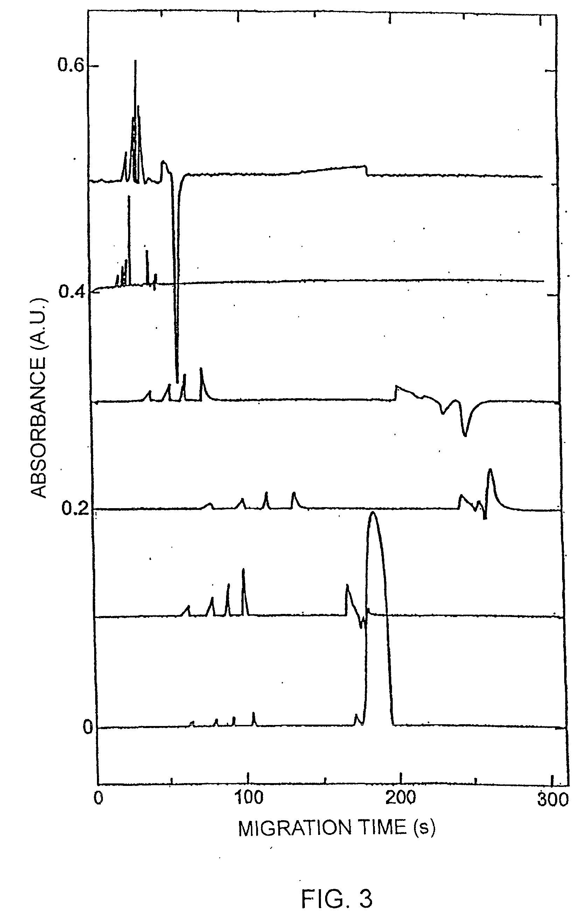

Fig. 3 shows pherograms obtained from an experiment not applying the migration time - effective mobility conversion according to the invention. The pherograms were obtained by the measurement under the following conditions in order from the above.

    (A) sample 30 mM, SE20mM (supporting electrolyte A), I.D. 75 μm, V = 30 kV
    (B) sample 30 mM, SE40mM (supporting electrolyte B), I.D. 75 μm, V = 30 kV
    (C) sample 30 mM, SE40mM (supporting electrolyte B), I.D. 50 μm, V = 30 kV
    (D) sample 30 mM, SE40mM (supporting electrolyte B), I.D. 50 μm, V = 15 kV
    (E) sample 30 mM, SE40mM (supporting electrolyte B), I.D. 75 μm, V = 15 kV
    (F) sample 0.3 mM, SE40mM (supporting electrolyte B), I.D. 75 μm, V = 15 kV

Further, in (C), a new capillary was used without processing the inner wall, and in other experiments, the capillaries that had been used several times were used.

Table 1 shows the measurement results (unit: second) of the migration time.

[Table 1]

|     | K | Na | L i | Tris | EOF |
|-----|------|------|--------|--------|--------|
| (A) | 22.36 | 27.65 | 31.52 | 38.91 | 58.4 |
| (B) | 17.84 | 21.28 | 23.88 | 27.24 | 41.44 |
| (C) | 35.32 | 48.42 | 59.93 | 82.1 | 233.3 |
| (D) | 72.29 | 94.99 | 112.76 | 147.3 | 260.8 |
| (E) | 57.72 | 74.15 | 86.22 | 102.64 | 176.1 |
| (F) | 61.58 | 77.52 | 89.59 | 107.46 | 185.71 |

Accordingly, the peaks are assigned to $K^+$, $Na^+$, $Li^+$, TRIS, $\varepsilon$-aminocaproic acid, system peak, and octylsulfonic acid in order from the left. It is understood that even in the same sample and electrolyte, various pherograms are obtained by changing the experimental conditions. Accordingly, when different equipments are used as described above, only the pherograms having a different migration time are obtained. For this reason, in order to measure a number of unknown samples at the same time, the standardization method in which the same substance exhibits the same quantitative index as described above is effective.

2-3. Experiment of the migration time - effective mobility conversion using the equation (8) according to the invention:

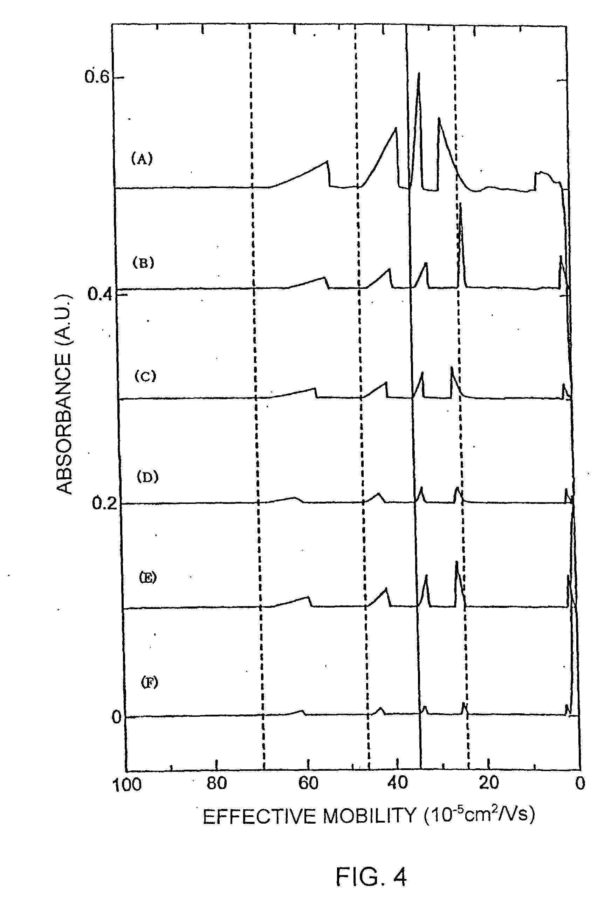

Fig. 4 shows pherograms at calculation (execution of S101 to S107) of the mobilities using the equation (8).
The peaks are assigned to $K^+$, $Na^+$, $Li^+$, and TRIS in order from the left. Further, in the drawing, the solid line shows the previously reported value, 34.9 ($m_{0, S}$ in the equation (8)) of Li used as the standard sample at 25 °C. The dotted lines show the previously reported values, 69.9, 46.3 and 24.4 of K, Na and TRIS, respectively at 25 °C in order from the left. By this experiment, the scattering of the data was greatly improved, and averages (relative standard deviations) of the mobilities of Na, Li and TRIS were 66.6 (3.60%), 45.7 (1.16%) and 22.6 (8.07 %), respectively. Further, these averages (relative standard deviations) were deviated from the previously reported values by 4.74 %, 1.37 % and 7.49 %, respectively. Especially, in the sample (D) where the electric power was the smallest, the inner diameter was small, and the applied voltage was low, the mobilities of K and Na were deviated from the previously reported values only by 0.93 % and 0.08 %, respectively. However, other data were estimated such that the mobility of K was smaller than the previously reported value.
That is, it is considered that since the delay time $\tau$ by the relaxation effect of potential gradient was not taken into consideration, an error of K having a small migration time became relatively slightly large. For example, in Na having a small mobility, the influence became small.

2-4. Experiment of the migration time - effective mobility conversion using the equation (16) according to the invention:

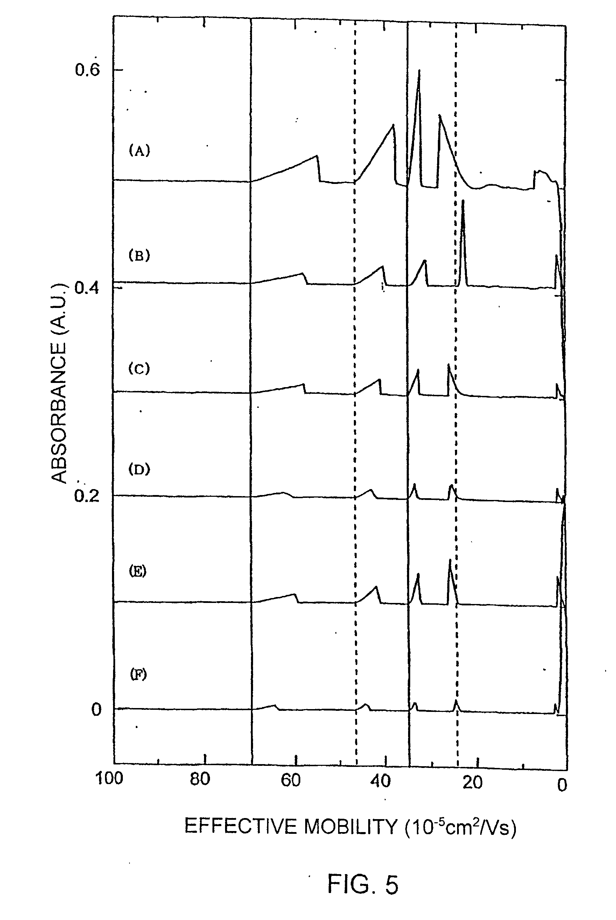

Fig. 5 shows pherograms at calculation (execution of S101 to S107) of the mobilities using the equations (14) and (16).
The peaks are assigned to $K^+$, $Na^+$, $Li^+$, and TRIS in order from the left. Further, in the drawing, the solid lines show the previously reported values, 69.9 ($m_{0, A}$ in the equations (14) and (16)) of K and 34.9 ($m_{0, B}$ in the equations (14) and (16)) of Li, respectively used as the standard samples at 25 °C. The dotted lines in the drawing show the previously reported values, 46.3 and 24.4 of Na and TRIS at 25 °C in order from the left. By this experiment, the scattering of the data was greatly improved, and averages (relative standard deviations) of the mobilities of Na and TRIS were 46.4 (0.30 %) and 22.2 (7.68%), respectively. Further, these were deviated from the previously reported values by 0.29 % and 9.17 %, respectively. Incidentally, the large deviation of TRIS was caused by the occurrence of tailing. On the other hand, it was exhibited that it is possible to depress the deviation of the mobility of Na to 0.3 % or less.
Further, it is possible to convert the mobility into an effective mobility at the reference temperature. Thus, it is possible to compare it with an effective mobility determined by other methods such as the conductivity method, thereby enabling to improve the flexibility of data.

3. Comparison with the conventional method:

3-1. Experiment using migration index (MI):

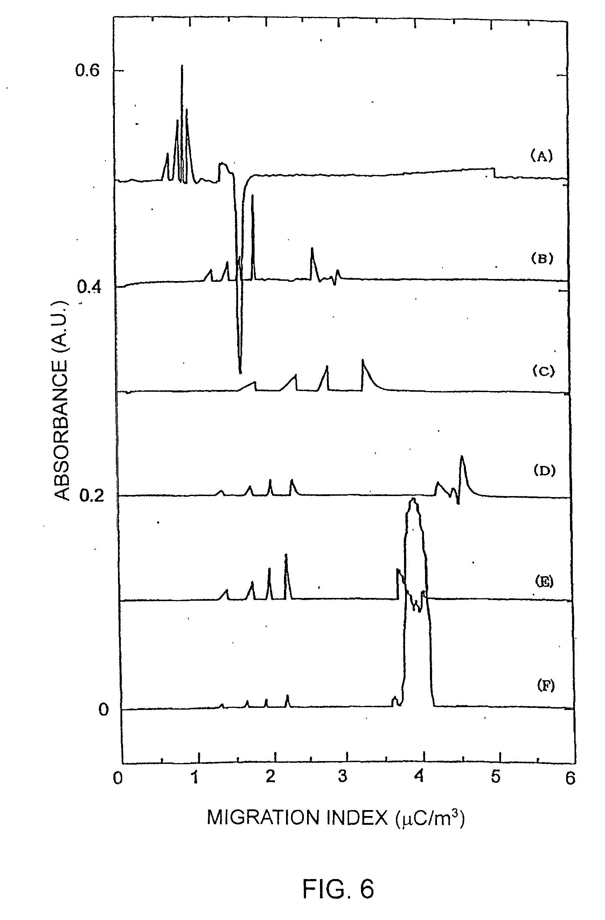

Fig. 6 shows pherograms in which the abscissa is MI.
In the case where MI using a value obtained by dividing a quantity of electricity, i.e., an integral value of current, by a cross-sectional area of a capillary and a whole length of the capillary, as proposed by Lee, et al., is used, (B), (D), (E) and (F) in which the peaks appeared at quite different migration times in the pherograms shown in Fig. 3 exhibited relatively good consistency (the peaks are assigned to $K^+$, $Na^+$, $Li^+$ and TRIS in order from the left as in Fig. 3) by putting them in order by MI. However, in (A) in which the supporting electrolyte is different and in (C) in which the velocity of the osmotic flow is largely different, the peaks appeared at the largely different MI values.

That is, it is shown that though the pherogram using MI can eliminate the influences of the temperature, it cannot thoroughly eliminate the nature of the electrolyte and the influences of the osmotic flow by MI.

3-2. Experiment using adjusted migration index (AMI):

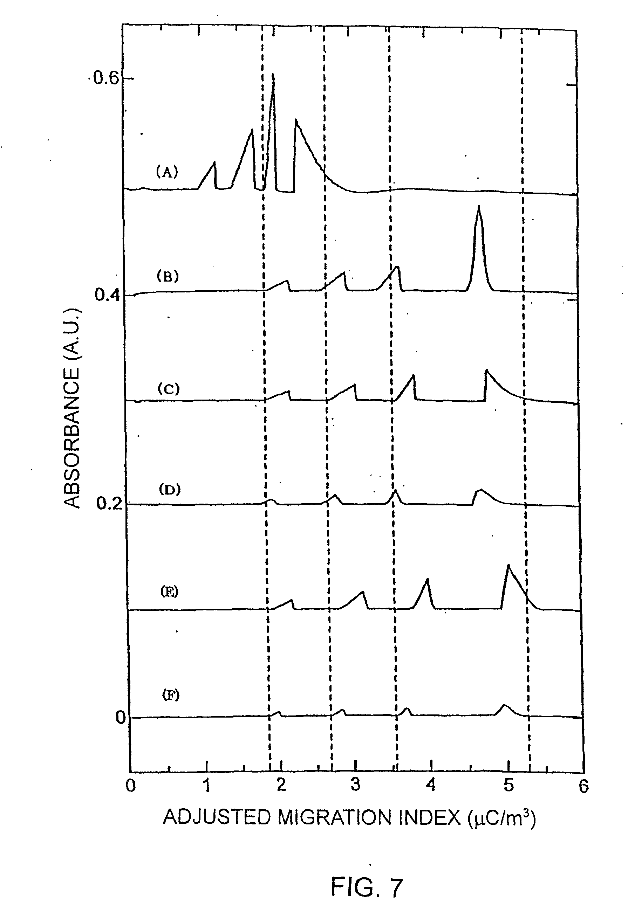

Fig. 7 shows pherograms in which the abscissa is AMI.

In the case where AMI in which the influences of the osmotic flow is further taken into consideration is used in place of MI, (B) to (F) using the same supporting electrolyte exhibit relatively good consistency. In the drawing, the dotted lines show average values of the peak positions of the respective substances of (B) to (F) The AMI values will be examined in detail while using the dotted lines as indexes. The relative standard deviations (RSD) are deviated by 4.83 % (K), 3.77% (Na), 4.70% (Li), and 7. 08 % (Tris), respectively. Further, nevertheless the mobility was substantially the same, (A) exhibited a quite different pherogram. This difference is caused by the matter that the conductivity of the supporting electrolyte is different.

That is, it is shown that though the pherogram using AMI can eliminate the influences of the temperature and osmotic flow, it cannot thoroughly eliminate the nature of the electrolyte.

3-3. Experiment by the conventional analysis method in which the abscissa is the effective mobility:

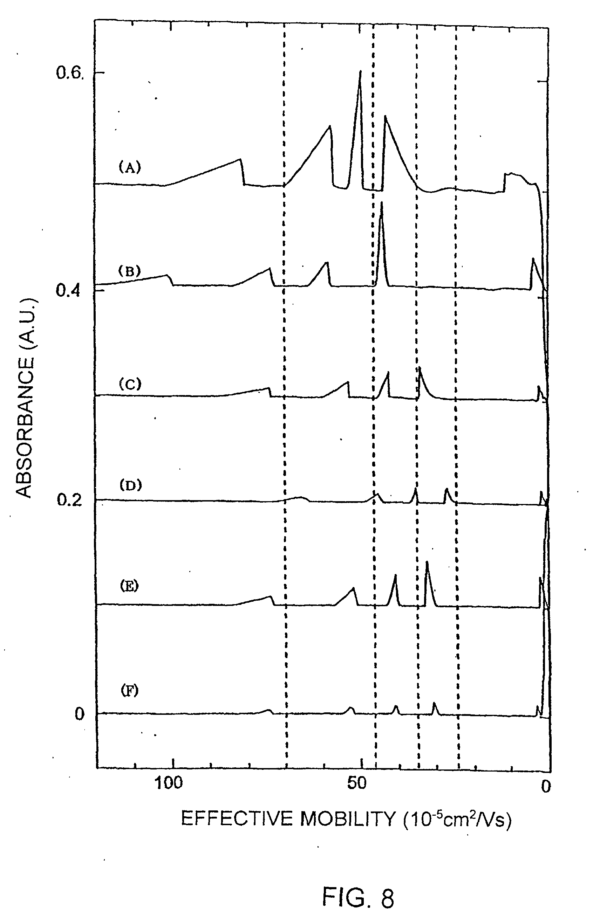

Fig. 8 shows pherograms according to the conventional analysis method, in which the abscissa is the effective mobility.

In this conventional analysis method, a velocity is determined from the migration time; from the determined velocity, a difference from the velocity of the osmotic flow is determined; this difference is divided by an applied voltage; and the obtained value is further multiplied by a whole length of the capillary, to calculate an effective mobility. In the pherograms in which the abscissa is the effective mobility, the peaks are assigned to $K^+$, $Na^+$, $Li^+$ and TRIS in order from the left. In the drawing, the dotted lines show the previously reported values, 69.9, 46.3, 34.9 and 24.4 of K, Na, Li and Tris, respectively at 25 °C in order from the left. The mobilities of the respective peaks were greatly scattered, and averages (relative standard deviations) of the mobilities of K, Na, Li and Tris were 90.7 (17.5 %), 62. 5 (19.9 %), 47.8 (21.0 %) and 31.1 (26.0 %), respectively.

According to the consideration in more detail, it is estimated that the effective mobilities of (A) to (C) in which the applied voltage is 30 kV are larger than those of (D) to (F) in which the applied voltage is 15 kV. This is because the electric power generated within the system was large, and the internal temperature increased, whereby the affective mobility became large. In particular, in (B) in which the inner diameter is large, and the electrolyte having a high concentration is used, such tendency was remarkably observed. In addition, the mobilities of all substances were estimated to be larger than the previously reported values.

Thus, in order to obtain data with reproducibility using the capillary zone electrophoresis to apply a high voltage, the data processing method for correcting the increase of the internal temperature is effective as in this embodiment of the invention as described above.

3-4. Experiment according to the analysis method as previously applied for patent by the present inventors, in which the abscissa is the effective mobility:

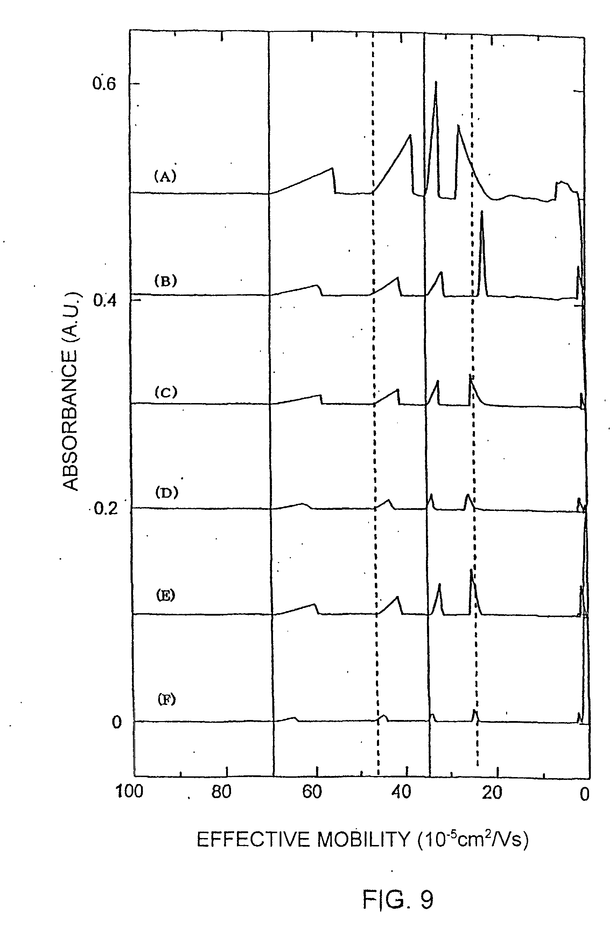

Fig. 9 shows pherograms according to the analysis method as previously applied for patent by the present inventors, in which the abscissa is the effective mobility (Japanese Patent Application No. 11-251604).

In the pherograms in which the abscissa is the effective mobility as calculated by this analysis method, the peaks are assigned to $K^+$, $Na^+$, $Li^+$ and TRIS in order from the left. In the drawing, the solid lines show the previously reported values, 69.9 of K and 34.9 of Li, respectively used as the standard samples at 25 °C. The dotted lines in the drawing show the previously reported values, 46.3 and 24.4 of Na and Tris at 25 °C in order from the left. By this experiment, the scattering of the data was greatly improved, and averages (relative standard deviations) of the mobilities of Na and Tris were 46.9 (1.05 %) and 21.8 (8.11 %), respectively. Further, these were deviated from the previously reported values by 0.64 % and 10.7 %, respectively. Incidentally, with respect to the migration time of TRIS, as in the article of Mikkers, et al. reporting that its evaluation is difficult because of the occurrence of tailing, and the mobility of Tris was largely deviated from the previously reported value. However, Na showed substantial consistency with the previously reported value.

Thus, this method is a very useful method. However, it is assumed that physical meanings become vague, as described above.

In the light of the above, when the experiment of the migration time - effective mobility conversion using the equations (8), (14) and (16) according to this embodiment of the invention is compared with the experiments using MI and AMI according to the conventional methods, the experiment according to the conventional analysis method in which the abscissa is the effective mobility, and the experiment according to the analysis method as previously applied for patent by the present inventors, it is possible to quickly determine an effective mobility of an unknown sample in a mixture at a certain reference temperature with precision by processing data measured by the capillary zone electrophoresis according to this embodiment of the invention.

Further, according to this embodiment of the invention, it is possible to eliminate the scattering in the effective mobility that likely varies depending on the operational conditions even in one equipment and to accumulate data as a standardized index every substance. Moreover, since the same index can be used among different equipments, when the accumulation of the database proceeds, it is expected to realize a very quick and precise analysis during the identification of unknown substances in the future.

INDUSTRIAL APPLICABILITY

As described above, according to the invention, by capillary zone electrophoresis, an effective mobility to play an important role for identifying an unknown sample can be quickly determined with high precision. Further, according to the invention, it is possible to eliminate scattering of the effective mobility by operational conditions of an analysis equipment and to enhance reliability of data as a standardized index every unknown sample. Moreover, according the invention, the same index can be used among different analysis equipments.

**Claims**

1. An electrophoretic analysis method including:

   a step of adding a standard substance to a sample containing an unknown sample and measuring migration times of the standard substance and the unknown sample by electrophoresis and a migration time of a substance having a mobility of 0 or a migration time of a system peak, and
   a step of determining an effective mobility of the unknown sample on the basis of the migration times of the standard substance and the unknown sample and the migration time of the substance having a mobility of 0 or the migration time of a system peak as measured in the measuring step, and a known effective mobility of the standard substance at a standard temperature.

2. The electrophoretic analysis method according to claim 1, wherein the step of determining an effective mobility of the unknown sample is to determine an effective mobility $m_0$ of the unknown sample on the basis of a migration time $t_S$ of the standard substance, a migration time $t$ of the unknown sample, a migration time $t_{eof}$ of the substance having a mobility of 0 or of the system peak, and an effective mobility $m_{0,\,S}$ of the standard substance at the standard temperature according to the following equation:

$$m_0 = \{(t_{eof} / t - 1) / (t_{eof} / t_S - 1)\} \cdot m_{o,\,S}$$

3. The electrophoretic analysis method according to claim 1, wherein the step of determining an effective mobility of the unknown sample is to determine the effective mobility of the unknown sample on the basis of the migration times of the two or more standard substances, the migration time of the unknown sample, the migration time of the substance having a mobility of 0 or of the system peak, and the effective mobilities of the standard substances at the standard temperature.

4. The electrophoretic analysis method according to claim 3, wherein the step of determining an effective mobility of the unknown sample is to determine an effective mobility $m_0$ of the unknown sample on the basis of migration times $t_A$ and $t_B$ of arbitrary two substances of the two or more standard substances, a migration time $t$ of the unknown sample, a migration time $t_{eof}$ of the substance having a mobility of 0 or of the system peak, and effective mobilities $m_{0,\,A}$ and $m_{0,\,B}$ of the standard substances at the standard temperature according to the following equations:

$$m_0 = \{(t_A - \tau)(t_{eof} - t) / (t - \tau)(t_{eof} - t_A)\} \cdot m_{0,A}$$

$$\tau = \{m_{0,A} t_A (t_{eof} - t_B) - m_{0,B} t_B (t_{eof} - t_A)\}$$

$$/ \{m_{0,A} (t_{eof} - t_B) - m_{0,B} (t_{eof} - t_A)\}$$

5. The electrophoretic analysis method according to any one of claims 1 to 4, further including a step of identifying the substance of the unknown sample from the effective mobility of the unknown sample.

6. An electrophoretic analysis method including:

a step of adding a standard substance to a sample containing an unknown sample and measuring migration times of the standard substance and the unknown sample by electrophoresis, and
a step of determining an effective mobility of the unknown sample on the basis of the migration times of the standard substance and the unknown sample as measured in the measuring step, and a known effective mobility of the standard substance at a standard temperature.

7. The electrophoretic analysis method according to claim 6, wherein the step of determining an effective mobility of the unknown sample is to determine an effective mobility $m_0$ of the unknown sample on the basis of migration times $t_A$, $t_B$ and $t_C$ of arbitrary three substances of the three or more standard substances, a migration time t of the unknown sample, and effective mobilities $m_{0,A}$ and $m_{0,B}$ and $m_{0,C}$ of the standard substances at the standard temperature according to the following equations:

$$m_0 = \{(t_i - t)(t_j - \tau)(m_{0,j} - m_{0,i})\}$$

$$/ \{(t - \tau)(t_i - t_j)\} + m_{0,i}$$

wherein i and j are any one of the standard substances A, B and C, and i is not equal to j,

$$\tau = \{m_{0,A} t_A (t_C - t_B) + m_{0,B} t_B (t_A - t_C) + m_{0,C} t_C (t_B - t_A)\}$$

$$/ \{m_{0,A} t_C - t_B) + m_{0,B} (t_A - t_C) + m_{0,C} (t_B - t_A)\}$$

EP 1 312 915 A1

FIG. 1

S 1 0 1

ADD STANDARD SUBSTANCE
TO UNKNOWN SAMPLE

S 1 0 3

EXECUTE
CAPILLARY ZONE
ELECTROPHORESIS

S 1 0 5

DETERMINE
VARIOUS PARAMETER VALUES
OF STANDARD SUBSTANCE
AND UNKNOWN SAMPLE

S 1 0 7

CALCULATE
EFFECTIVE MOBILITY
OF UNKNOWN SAMPLE
ON THE BASIS OF VARIOUS
PARAMETER VALUES
AND THEORETICAL EQUATION

S 1 0 9

IDENTIFY SUBSTANCE
OF UNKNOWN SAMPLE
FROM EFFECTIVE MOBILITY
OF UNKNOWN SAMPLE

FIG. 2

FIG. 3

FIG. 4

FIG. 5

FIG. 6

FIG. 7

FIG. 8

FIG. 9

<div align="center">

**INTERNATIONAL SEARCH REPORT**

</div>

| | International application No. |
|---|---|
| | PCT/JP01/05213 |

**A. CLASSIFICATION OF SUBJECT MATTER**
Int.Cl$^7$   G01N27/447

According to International Patent Classification (IPC) or to both national classification and IPC

**B. FIELDS SEARCHED**

Minimum documentation searched (classification system followed by classification symbols)
Int.Cl$^7$   G01N27/447

Documentation searched other than minimum documentation to the extent that such documents are included in the fields searched
Jitsuyo Shinan Koho        1922-1996        Toroku Jitsuyo Shinan Koho  1994-2001
Kokai Jitsuyo Shinan Koho  1971-2001        Jitsuyo Shinan Toroku Koho  1996-2001

Electronic data base consulted during the international search (name of data base and, where practicable, search terms used)
JOIS, [capillary electrophoresis * (temperature + electroosmotic flow)]
(in Japanese)

**C. DOCUMENTS CONSIDERED TO BE RELEVANT**

| Category* | Citation of document, with indication, where appropriate, of the relevant passages | Relevant to claim No. |
|---|---|---|
| A | JP 4-303757 A (Shimadzu Corporation), 27 October, 1992 (27.10.92), Par. Nos. [0006], [0007]; Figs. 1 to 2 (Family: none) | 1-7 |
| A | JP 11-248679 A (Nippon Bunko Kogyo K.K.), 17 September, 1999 (17.09.99), Par. Nos. [0008] to [0015] (Family: none) | 1-7 |
| P,A | JP 2001-074694 A (Hiroshima Univ.), 23 March, 2001 (23.03.01), Par. Nos. [0002] to [0059] (Family: none) | 1-7 |

☐ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 30 July, 2001 (30.07.01) | 07 August, 2001 (07.08.01) |

| Name and mailing address of the ISA/ | Authorized officer |
|---|---|
| Japanese Patent Office | |
| Facsimile No. | Telephone No. |

Form PCT/ISA/210 (second sheet) (July 1992)